# EUROPEAN PATENT APPLICATION

(11) **EP 2 288 088 A1**
(43) Date of publication of application: **23.02.2011**
(21) Application number: 09765373.7
(22) Date of filing: 08.06.2009
(51) Int. Cl.: H04L 12/56

(54) **PROCESS METHOD, SYSTEM AND DEVICE FOR BINDING/UNBINDING**

(30) Priority: 17.06.2008 CN 200810127008
(71) Applicant: Huawei Technologies Co., Ltd., Longgang District, Shenzhen Guangdong 518129 (CN)
(72) Inventor: ZHENG, Ruobin, Longgang District Shenzhen 518129 (CN); LI, Hongyu, Longgang District Shenzhen 518129 (CN)
(74) Representative: Kreuz, Georg Maria
(86) International application number: PCT/CN2009/072184
(87) International publication number: WO 2009/152734

(57) **Abstract**

A binding/unbinding processing method, system and apparatus are disclosed. The binding processing system includes: an Internet Protocol (IP) edge node and an Access Node (AN). The IP edge node is adapted to: monitor received Dynamic Host Configuration Protocol (DHCP) messages and after monitoring a specific DHCP message, forward the specific DHCP message to all ANs corresponding to bound links, where the specific DHCP message is a DHCP ACK or DHCP REPLY message. The AN is adapted to: receive the specific DHCP message sent by the IP edge node, parse and obtain an IP or Media Access Control (MAC) address carried in the specific DHCP message, and bind a port of the AN to the IP or MAC address according to the obtained IP address or MAC address. The present invention realizes the binding/unbinding of an AN port to/from an IP or MAC address in inter-AN binding scenarios.

## Description

This application claims priority to Chinese Patent Application No. 200810127008.9, filed with the Chinese Patent Office on June 17, 2008 and entitled "Binding/Unbinding Processing Method, System, and Apparatus", which is incorporated herein by reference in its entirety.

### FIELD OF THE INVENTION

The present invention relates to a communications technology, and in particular, to a binding/unbinding processing method, system, and apparatus.

### BACKGROUND OF THE INVENTION

With the requirement of users for more access bandwidth, the urgent need of operators to provide video value-added services such as Internet Protocol Television (IPTV), and the need of enterprises for more access bandwidth, it becomes harder and harder for conventional Digital Subscriber Line (xDSL) access to satisfy the increasing bandwidth requirement.

Nowadays, many users are still accessed though copper wires. A conventional technique, therefore, binds DSLs so that the copper wire access can meet the requirement for more bandwidth. The DSL binding technology multiplexes at least two pairs of DSLs to increase the bandwidth.

DSL binding techniques include intra-board binding, inter-board binding and inter-DSLAM (Digital Subscriber Line Access Multiplexer) binding. The first two techniques are subject to many restrictions in practice while inter-DSLAM binding is more flexible and has a wide application scope.

The conventional technique provides a binding method through aggregation at the link layer, where multiple links are bound through the Ethernet protocol at the link layer. Specifically, the aggregation of multiple links is implemented by extending the optional link aggregation sublayer between the Media Access Control (MAC) client sublayer and the MAC/optional MAC sublayer. The conventional technique also extends the Link Aggregation Control Protocol (LACP) to implement the information interaction between aggregation entities.

A system that implements the above method distributes multiple frames to different ports through a frame distribution algorithm. The frames are aggregated at the peer end of the system and frames of one session are forwarded through one port.

Currently, user access depends more and more on the Dynamic Host Configuration Protocol (DHCP). A user terminal obtains such configuration information as an Internet Protocol (IP) address dynamically through DHCP, thus realizing dynamic access of the user.

The inventor of the present invention, however, finds the following weakness in the conventional technique: in an inter-AN (Access Node) binding scenario, data packets are transferred over different data links or lines and in a DHCP access scenario, the AN monitors DHCP messages through DHCP snooping to bind/unbind ports to/from IP or MAC addresses. Therefore, when a DHCP message is transferred by means of fragmentation like ordinary messages or over one single link, not all ANs will receive the DHCP message. As a result, the ANs will be unable to bind/unbind ports to/from IP or MAC addresses by DHCP snooping.

### SUMMARY OF THE INVENTION

Embodiments of the present invention provide a binding/unbinding processing method, system, and apparatus so that all ANs corresponding to bound links can receive DHCP messages and bind/unbind ports to/from IP or MAC addresses according to the received DHCP messages.

For the above purpose, a binding processing system provided according to an embodiment of the present invention includes an IP edge node and an AN, where:
the IP edge node is adapted to monitor received DHCP messages and after monitoring a specific DHCP message, forward the specific DHCP message to all ANs corresponding to bound links, where the specific DHCP message is a DHCP ACK or DHCP REPLY message; and
the AN is adapted to: receive the specific DHCP message sent by the IP edge node, parse and obtain an IP or MAC address carried in the specific DHCP message, and bind a port of the AN to the IP or MAC address according to the obtained IP address or MAC address.

An unbinding processing system includes a Remote Gateway (RG) and an AN; where:
the RG is adapted to monitor received DHCP messages and after monitoring a specific DHCP message, forward the specific DHCP message to all ANs corresponding to bound links, where the specific DHCP message is a DHCP RELEASE message; and
the AN is adapted to: receive the specific DHCP message sent by the RG, parse and obtain an IP or MAC address carried in the specific DHCP message, and unbind a port of the AN from the IP or MAC address according to the obtained IP address or MAC address.

An IP edge node includes:
a link binding unit, adapted to monitor received DHCP messages and after monitoring a specific DHCP message, forward the specific DHCP message to all ANs corresponding to bound links, where the specific DHCP message is a DHCP ACK or DHCP REPLY message;
a core network interface unit, adapted to exchange messages with a core network; and
an aggregation network interface unit, adapted to exchange messages with an aggregation network.

An RG includes:
a link binding unit, adapted to monitor received DHCP messages and after monitoring a specific DHCP message, forward the specific DHCP message to all ANs corresponding to bound links, where the specific DHCP message is a DHCP RELEASE message;
a user network interface unit, adapted to exchange messages with a user network; and
a signal converting unit, adapted to perform signal conversion for messages sent by the user network.

A binding/unbinding processing method includes:
monitoring received DHCP messages; and
after monitoring a specific DHCP message, forwarding the specific DHCP message to all ANs corresponding to bound links and instructing each AN to bind/unbind a port of the AN to/from an IP or MAC address, where the specific DHCP message includes a DHCP ACK, DHCP REPLY, or DHCP RELEASE message.

Another binding/unbinding processing method includes:
monitoring received DHCP messages; and
after monitoring a specific DHCP message, generating a Layer 2 Control Protocol (L2CP) control message and sending the L2CP control message to All ANs corresponding to bound links, where the L2CP control message instructs each of the ANs corresponding to the bound links to bind/unbind a port carried in the L2CP control message to/from an IP or MAC address carried in the L2CP control message.

A binding/unbinding processing system includes an IP edge node and an AN; where:
the IP edge node is adapted to: monitor received DHCP messages and when monitoring a specific DHCP message, generate an L2CP control message, and send the L2CP control message to all ANs corresponding to bound links; and
the AN is adapted to: receive the L2CP control message from the IP edge node, parse and obtain a port and an IP or MAC address carried in the L2CP control message, and bind/unbind the port to/from the IP or MAC address according to the obtained port and IP or MAC address.

An IP edge node includes:
an access control unit, adapted to monitor received DHCP messages and after monitoring a specific DHCP message, generate an L2CP control message which instructs all ANs corresponding to bound links to bind/unbind a port carried in the L2CP control message to/from an IP or MAC address carried in the L2CP control message, where the specific DHCP message includes a DHCP ACK, DHCP REPLY, or DHCP RELEASE message;
a link binding unit, adapted to provide port information of the ANs corresponding to the bound links to the access control unit;
a core network interface unit, adapted to exchange messages with a core network; and
an aggregation network interface unit, adapted to exchange messages with an aggregation network.

Compared with the conventional technique, the embodiments of the present invention provide the following benefit: all ANs corresponding to the bound links can receive a specific DHCP message sent by the IP edge node and according to the IP or MAC address carried in the specific DHCP message, each AN can bind the port of the AN to the obtained IP or MAC address or unbind the port of the AN from the IP or MAC address. The embodiments of the present invention provide a solution for binding/unbinding the port of an AN to/from an IP or MAC address in an inter-AN binding scenario.

### BRIEF DESCRIPTION OF THE DRAWINGS

FIG. 1 is a schematic view of a system for implementing inter-AN binding;
FIG. 2 is a schematic view of a system for implementing line binding in both DSL and PON application scenarios;
FIG. 3 is a flowchart of a binding/unbinding processing method according to an embodiment of the present invention;
FIG. 4 illustrates a structural diagram of a binding processing system according to an embodiment of the present invention;
FIG. 5 illustrates a structural diagram of an IP edge node according to an embodiment of the present invention;
FIG. 6 illustrates a connection relation of a binding processing system according to an embodiment of the present invention;
FIG. 7 illustrates a procedure for binding an AN port to an IP or MAC address according to an embodiment of the present invention;
FIG. 8 is a flowchart of binding a port to an IP or MAC address according to an embodiment of the present invention;
FIG. 9 illustrates a structural diagram of an unbinding processing system according to an embodiment of the present invention;
FIG. 10 illustrates a structural diagram of an RG according to an embodiment of the present invention;
FIG. 11 illustrates a procedure for unbinding an AN port from an IP or MAC address according to an embodiment of the present invention;
FIG. 12 is a flowchart of unbinding a port from an IP or MAC address according to an embodiment of the present invention;
FIG. 13 illustrates a forwarding control unit of the RG or IP edge node according to an embodiment of the present invention;
FIG. 14 illustrates another forwarding control unit of the RG or IP edge node according to an embodiment of the present invention;
FIG. 15 illustrates a structural diagram of a binding/unbinding processing system according to an embodiment of the present invention;
FIG. 16 illustrates a structural diagram of an IP edge node according to an embodiment of the present invention;
FIG. 17 is a flowchart of a binding/unbinding processing method according to an embodiment of the present invention;
FIG. 18 is a schematic view of a binding/unbinding processing system according to an embodiment of the present invention; and
FIG. 19 is a flowchart of a method for binding/unbinding an AN port to/from an IP or MAC address according to an embodiment of the present invention.

### DETAILED DESCRIPTION OF THE EMBODIMENTS

The embodiments of the present invention provide a binding/unbinding processing method, which realizes the binding/unbinding of a port to/from an IP or MAC address in the case of inter-AN binding, so that packets with illegal IP or MAC addresses cannot attack network devices.

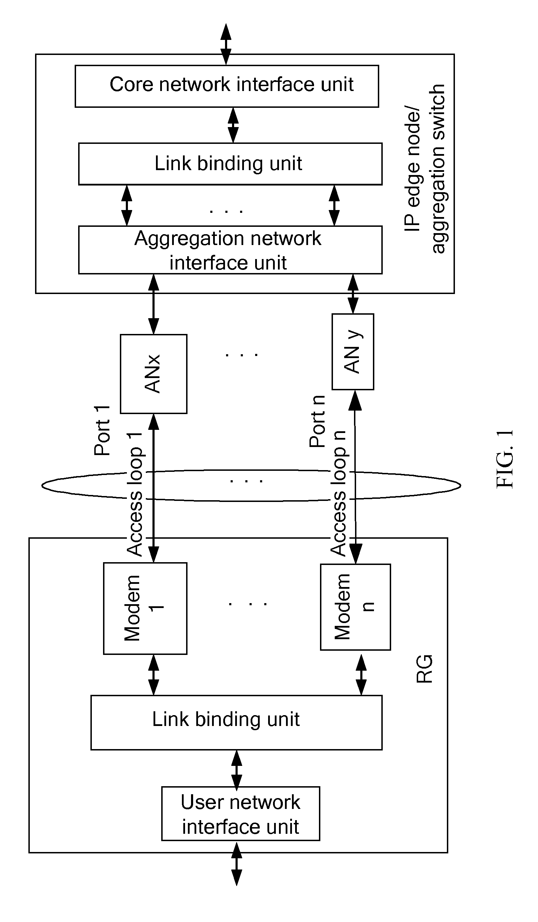

FIG. 1 is a schematic view of the system for implementing inter-AN binding. Taking the DSL scenario as an example, the system includes three parts: an RG, an IP edge node/aggregation switch, and multiple ANs (ANx, ..., ANy).

The RG includes a user network interface unit, a link binding unit, and n modems (modem 1, ..., modem n).

The user network interface unit is, on the one hand, connected to a user network to receive and transmit data packets of the user network and, on the other hand, connected to the link binding unit.

The link binding unit is the major part that implements binding and is adapted to implement load sharing of uplink data among multiple links and restore downlink data packets. The link binding unit may be implemented based on different technologies, such as Institute of Electrical and Electronics Engineers (IEEE) 802.3ad and IEEE 802.3ah.

The modems (modem 1, ..., modem n) are adapted to modulate and demodulate DSL signals.

The IP edge node/aggregation switch includes an aggregation network interface unit, a link binding unit, and a core network interface unit.

The aggregation network interface unit is connected to the aggregation network and ANs (ANx, ..., ANy), and adapted to: receive and transmit packets of the aggregation network, forward packets transmitted by the link binding unit to multiple links in the aggregation network, and forward packets transmitted by multiple links in the aggregation network to the link binding unit.

Corresponding to the link binding unit of the RG, the link binding unit of the IP edge node/aggregation switch is adapted to implement load sharing of downlink data among multiple links and restore uplink data packets. Like the link binding unit of the RG, the link binding unit of the IP edge node/aggregation switch can also be implemented based on different technologies.

The core network interface unit is, on the one hand, connected to a core network to receive and transmit data packets of the core network and, on the other hand, connected to the link binding unit.

The ANs (ANx, ..., ANy) may be multiple DSLAMs corresponding to the bound lines.

The implementation methods of inter-AN binding include: fragmenting frames and sharing the load among multiple links for transmission, and load sharing of a session among multiple links.

In addition, in the case of a Passive Optical Network (PON), access fibers can be bound to increase bandwidth. To achieve this, it is only necessary to change the modems in FIG. 1 to

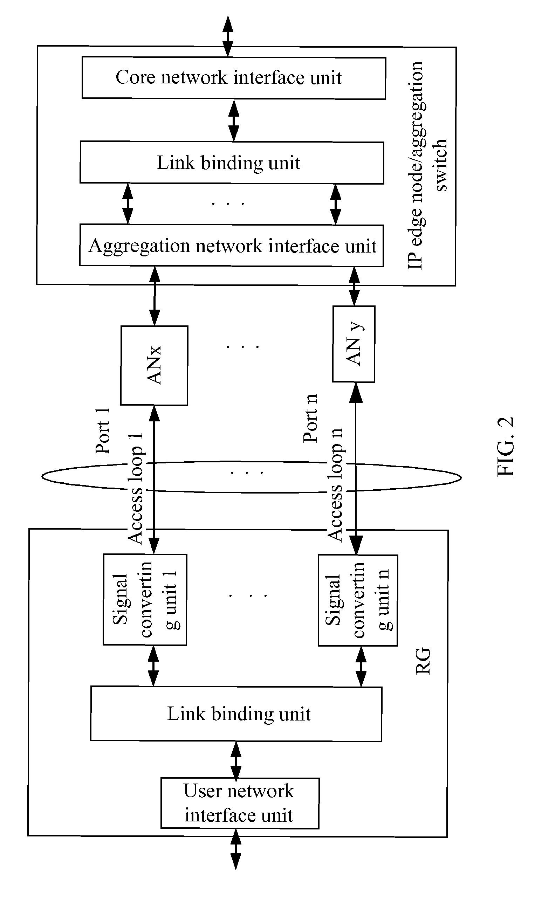

PON optical modules on the architecture of the system for implementing inter-AN binding. A system for implementing line binding in both DSL and PON scenarios is illustrated in FIG. 2.

The signal converting unit in FIG. 2 is a modem in a DSL scenario and an optical module for performing optical-electrical conversion in a PON scenario, and the access line in FIG. 2 is an access loop in a DSL scenario and an optical fiber in a PON scenario.

The binding of AN ports and IP or MAC addresses through snooping of DHCP messages is realized by monitoring the DHCP ACK or DHCP REPLY message in a normal DHCP procedure. A DHCP server sends configuration parameters such as IP address to a DHCP client through a DHCP ACK or DHCP REPLY message. If the AN monitors the DHCP ACK or DHCP REPLY message, the AN can parse the IP or MAC address so as to bind a corresponding port to the IP or MAC address.

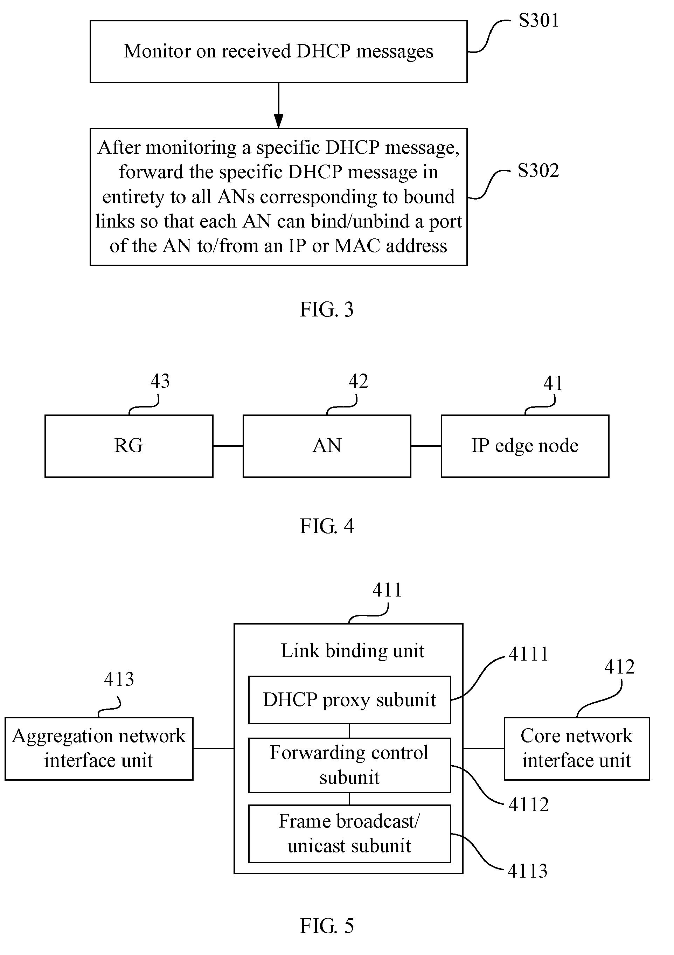

FIG. 3 is a flowchart of the binding/unbinding processing method according to an embodiment of the present invention. The method includes the following steps:
Step S301: Monitor received DHCP messages.
Step S302: When a specific DHCP message is monitored, forward the DHCP message to all ANs corresponding to the bound links so that an AN can bind/unbind a port of the AN to/from an IP or MAC address. The specific DHCP message may include a DHCP ACK, DHCP REPLY, or DHCP RELEASE message.

In the embodiment of the present invention, the IP edge node or RG monitors the received DHCP messages and when monitoring a specific DHCP message, such as DHCP ACK, DHCP REPLY, or DHCP RELEASE, the IP edge node or RG forwards the specific DHCP message to the all ANs corresponding to the bound links. Specifically, the IP edge node or RG may broadcast the specific DHCP message to all ANs corresponding to the bound links.

They binding/unbinding of a port of the AN to/from an IP or MAC address may be:
The AN parses and obtains the IP address or MAC address carried in the HDCP message, and binds/unbinds a port of the AN to/from the IP or MAC address according to the obtained IP address or MAC address.

After the AN binds/unbinds a port of the AN to/from the IP address or MAC address according to the specific DHCP message, the AN forwards the specific DHCP message to the RG or IP edge node. After receiving multiple identical DHCP messages, the RG or IP edge node forwards only one specific DHCP message and discards other identical messages.

The above binding/unbinding processing method realizes the forwarding of a specific HDCP message that is monitored to all ANs corresponding to the bound links, so that every AN is able to bind/unbind a corresponding port to/from an IP or MAC address by monitoring DHCP messages. This effectively prevents packets with illegal IP or MAC addresses from attacking network devices and improves the access security of network devices.

FIG. 4 illustrates a structural diagram of the binding processing system according to an embodiment of the present invention. The system includes an IP edge node 41 and an AN 42.

The IP edge node 41 is adapted to monitor received DHCP messages and when monitoring a specific DHCP message, forward the specific DHCP message to ANs 42 corresponding to the bound links, where the specific DHCP message may be a DHCP ACK or DHCP REPLY message.

The AN 42 is adapted to: receive the specific DHCP message sent by the IP edge node 41, parse and obtain an IP address or MAC address carried in the specific DHCP message, and bind a port of the AN 42 to the IP address or MAC address according to the obtained IP address or MAC address. It should be noted that only one AN is shown in FIG. 4, but the number of ANs in the binding processing system may be more than one.

The binding processing system further includes an RG 43, adapted to: receive the specific DHCP message forwarded by the ANs 42 corresponding to the bound links and after receiving multiple identical DHCP messages, forward one specific DHCP message to a user network and discard other identical DHCP messages.

In the above binding processing system, the IP edge node 41 forwards the monitored specific DHCP messages, such as DHCH ACK or DHCP REPLY, to all ANs 42 corresponding to the bound links, so that every AN 42 is able to bind a corresponding port of the AN 42 to an IP address or MAC address by monitoring DHCP messages.

FIG. 5 illustrates a structural diagram of the IP edge node 41 according to an embodiment of the present invention, including:
a link binding unit 411, adapted to monitor received DHCP messages and when monitoring a specific DHCP message, forward the specific DHCP message to ANs 42 corresponding to the bound links, where the specific DHCP message may be a DHCP ACK or DHCP REPLY message;
a core network interface unit 412, adapted to exchange messages with a core network; and
an aggregation network interface unit 413, adapted to exchange messages with an aggregation network.

The link binding unit 411 may include a DHCP proxy subunit 4111, a forwarding control subunit 4112, and a frame broadcast/unicast subunit 4113.

The DHCP proxy subunit 4111 is adapted to monitor received DHCP messages and after monitoring a specific DHCP message, send an instruction to the forwarding control subunit 4112, instructing the forwarding control subunit 4112 to send the specific DHCP message to the frame broadcast/unicast subunit 4113.

The forwarding control subunit 4112 is adapted to send the specific DHCP message to the frame broadcast/unicast subunit 4113 according to the instruction sent by the DHCP proxy subunit 4111.

The frame broadcast/unicast subunit 4113 is adapted to receive the specific DHCP message sent by the forwarding control subunit 4112 and broadcast the specific DHCP message to all ANs 42 corresponding to the bound links. The frame broadcast/unicast subunit 4113 may also unicast the message to a specific port.

In the above IP edge node 41, the DHCP proxy subunit 4111 in the link binding unit 411 monitors received DHCP messages and after monitoring a specific DHCP message, instructs the forwarding control subunit 4112 to forward the monitored specific DHCP message, such as DHCP ACK or DHCP REPLY, to the frame broadcast/unicast subunit 4113, and the frame broadcast/unicast subunit 4113 forwards the specific DHCP message to the all ANs 42 corresponding to the bound links, so that every AN 42 is able to bind a port of the AN 42 to an IP or MAC address according to the IP or MAC address carried in the specific DHCP message.

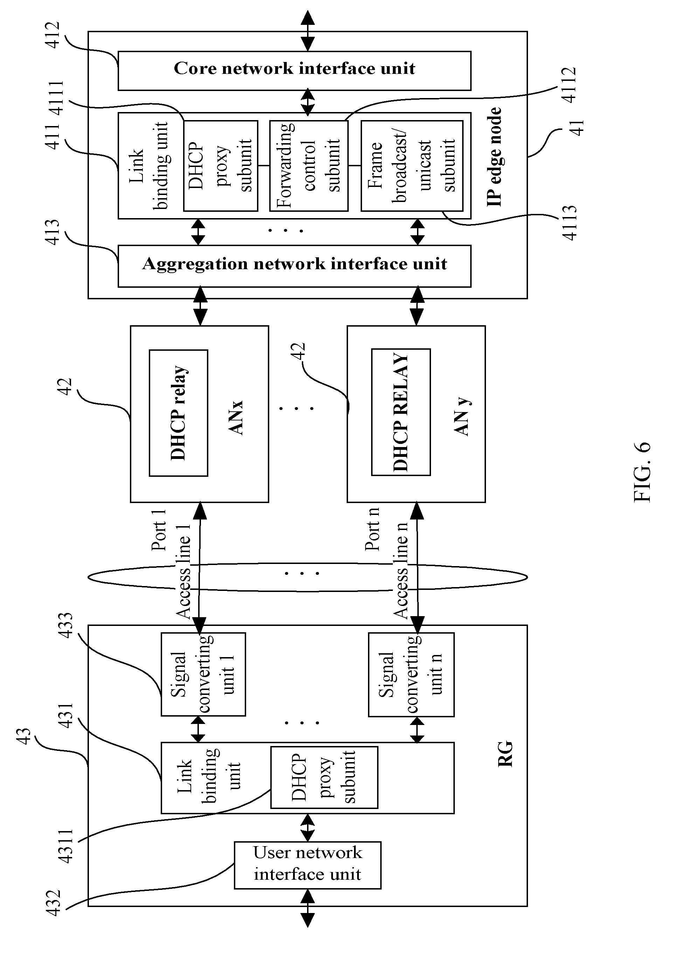

FIG. 6 is a schematic view of a connection relation of the binding processing system according to an embodiment of the present invention. In the embodiment of the present invention, the link binding unit 411 of the IP edge node 41 includes an additional DHCP proxy function.

The additional DHCP proxy subunit 4111 in the link binding unit 411 of the IP edge node 41 performs special processing on DHCP messages or performs special processing on only a specific DHCP message, such as DHCP ACK or DHCP REPLY. After monitoring a specific DHCP message, the DHCP proxy subunit 4111 sends an instruction to the forwarding control subunit 4112, instructing the forwarding control subunit 4112 to send the specific DHCP message to the frame broadcast/unicast subunit 4113.

In addition, in other embodiments of the present invention, the DHCP proxy subunit 4111 may be located between the link binding unit 411 and the core network interface unit 412, or between the link binding unit 411 and the aggregation network interface unit 413 provided that the link binding unit 411 is aware of what the DHCP proxy subunit 4111 is aware of.

The AN 42 provides a DHCP relay function. The AN perceives DHCP messages through a built-in DHCP relay unit to bind a port of the AN 42 to an IP or MAC address. Then the AN forwards the specific DHCP message or all DHCP messages to the RG 43.

The RG 43 includes a link binding unit 31, adapted to: monitor DHCP messages sent by ANs 42 and when monitoring a specific DHCP message, such as DHCP ACK or DHCP REPLY, forward one specific message to the user network and discard other identical DHCP messages.

The RG 43 may further include:
a user network interface unit 432, adapted to exchange messages with the user network; and
a signal converting unit 433, adapted to perform signal conversion for the messages exchanged between the RG 43 and the ANs 42.

The link binding unit 431 may include:
a DHCP proxy subunit 4311, adapted to: monitor DHCP messages sent by ANs 42 and when monitoring a specific DHCP message, such as DHCP ACK or DHCP REPLY, trigger the link binding unit 431 to forward one of the received identical DHCP ACK or DHCP REPLY messages to the user network and discard other identical DHCP messages.

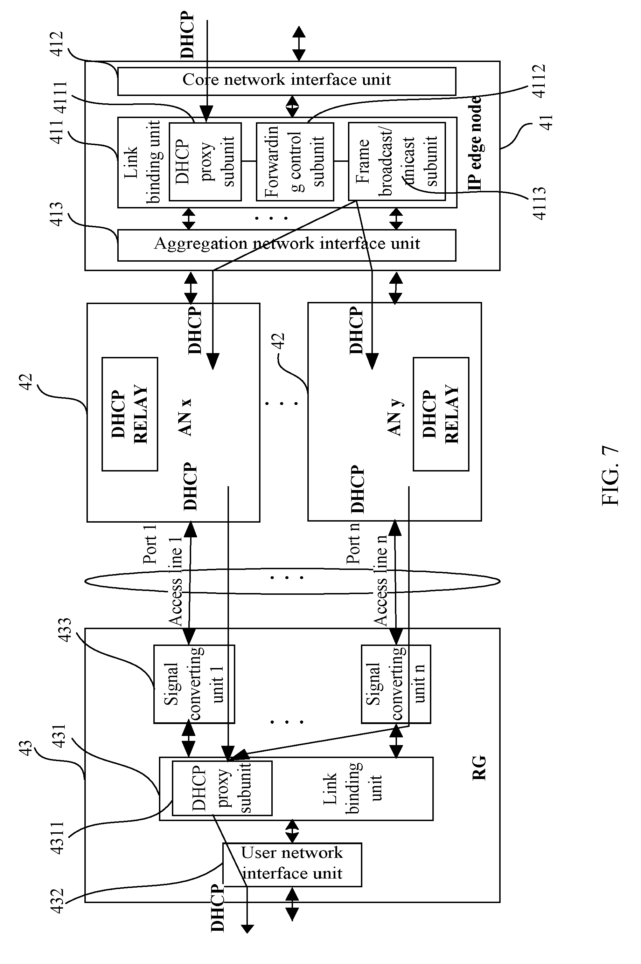

In a procedure for allocating address and other parameters through DHCP, the DHCP server sends the address and other parameters finally allocated to a user terminal through a DHCP ACK or DHCP REPLY message. A procedure for binding a port of an AN 42 to an IP or MAC address according to an embodiment of the present invention is illustrated in FIG. 7. The procedure includes two portions:
(1) In the link binding unit 411 of the IP edge node 41, the DHCP proxy subunit 4111 1 monitors received DHCP messages and when monitoring the aforesaid DHCP ACK or DHCP REPLY message, triggers the link binding unit 411 to perform special processing on the message, and the frame broadcast/unicast subunit 4113 forwards the message to all bound links, instead of performing the operations in normal binding cases.
(2) In the link binding unit 431 of the RG 43, the DHCP proxy subunit 4311 monitors DHCP messages sent by ANs 42 and after monitoring DHCP ACK or DHCP REPLY messages from the links, the user network interface unit 432 forwards only one message to the user network and discards other identical messages.

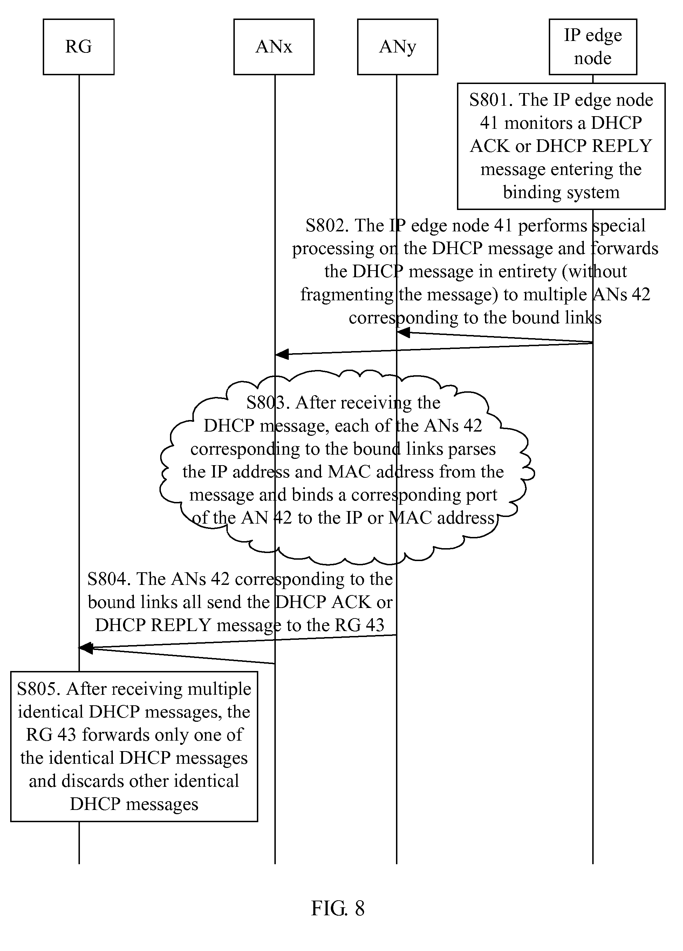

FIG. 8 is a flowchart of the method for binding a port to an IP or MAC address according to an embodiment of the present invention.

In FIG. 8, the system includes only two ANs 42 (ANx, and ANy) for exemplary description. In practice, the present invention is not limited to such implementation. The binding system may include any number (two or above) of links and ANs 42 on the links and the any number of ANs 42 process DHCP messages in the same way. Therefore, the processing in the case of any number of ANs 42 can be derived from the method provided in the embodiment of the present invention.

The processing procedure includes the following steps:
Step S801: The IP edge node 41 monitors a DHCP ACK or DHCP REPLY message entering the binding system.
Step S802: The IP edge node 41 performs special processing on the DHCP message and forwards the DHCP message in entirety (for example, without fragmenting the DHCP message) to ANs 42 corresponding to multiple bound links. Specifically, the IP edge node 41 forwards the DHCP ACK or DHCP REPLY message to all ANs 42 corresponding to the bound links. In FIG. 8, ANx and ANy represent the multiple ANs 42 corresponding to the bound links.
Step S803: After receiving the DHCP message, each of the ANs 42 corresponding to the bound links parses the IP address and MAC address in the message and binds a corresponding port of the AN 42 to the IP or MAC address.
Step S804: The ANs 42 corresponding to the bound links all send the DHCP ACK or DHCP REPLY message to the RG 43.
Step S805: After receiving multiple identical DHCP messages, the RG 43 performs special processing on the received multiple DHCP messages, forwards only one of the DHCP messages, and discards other identical DHCP messages.

In the embodiment of the present invention, after receiving a DHCP message, the link binding unit 411 in the IP edge node 41 does not distribute the DHCP message in the normal distribution procedure of the binding system, but forwards the DHCP message in entirety to the AN 42 corresponding to each bound link. Thus, the AN 42 corresponding to each bound link will receive the DHCP message and the DHCP relay unit in the AN 42 is aware of the DHCP message, so that a port of the AN 42 is bound to an IP or MAC address.

In addition, in the embodiment, the processing of DHCP messages may be applied to specific DHCP messages which include at least the DHCP ACK or DHCP REPLY message, or applied to all DHCP messages.

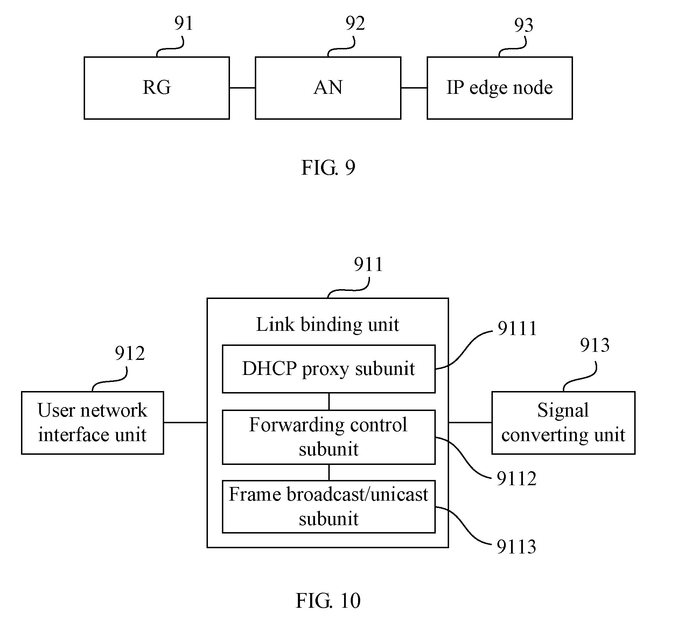

FIG. 9 illustrates a structural diagram of the unbinding processing system according to an embodiment of the present invention. The system includes an RG 91 and an AN 92.

The RG91 is adapted to monitor received DHCP messages and after monitoring a specific DHCP message, forward the DHCP message in entirety to ANs 92 corresponding to the bound links. The specific DHCP message is DHCP RELEASE.

The AN 92 is adapted to: receive the specific DHCP message sent by the RG 91, parse and obtain an IP address or MAC address carried in the specific DHCP message, and unbind a port of the AN 92 from the IP address or MAC address according to the obtained IP address or MAC address. It should be noted that only one AN is shown in FIG. 9, but the number of ANs in the unbinding processing system may be more than one.

The unbinding processing system may further include an IP edge node 93, adapted to: receive the specific DHCP message forwarded by the ANs 92 corresponding to the bound links and after receiving multiple identical DHCP messages, forward only one specific DHCP message to the core network and discard other identical DHCP messages.

When the user requests to release a DHCP connection actively, the user sends a DHCP RELEASE message. In the above unbinding processing system, the RG 91 monitors the DHCP RELEASE message, so as to unbind a port from the IP or MAC address. After monitoring the DHCP RELEASE message, the RG 91 duplicates the DHCP RELEASE message to each port corresponding to the binding system and sends the DHCP RELEASE message from the ports. Thus, the AN 92 corresponding to each port will receive the DHCP RELEASE message and unbind the port.

FIG. 10 illustrates a structural diagram of the RG according to an embodiment of the present invention. The RG includes:
a link binding unit 911, adapted to monitor received DHCP messages and after monitoring a specific DHCP message, forward the specific DHCP message in entirety to ANs 92 corresponding to the bound links, where the specific DHCP message is DHCP RELEASE;
a user network interface unit 912, adapted to exchange messages with the user network; and
a signal converting unit 913, adapted to perform signal conversion for the messages exchanged between the RG 91 and the ANs 92. For example, in the case of DSL access, the signal converting unit 913 is adapted to modulate signals and in the case of PON access, the signal converting unit 913 is adapted to perform optical-electrical conversion.

The link binding unit 911 includes a DHCP proxy subunit 9111, a forwarding control subunit 9112, and a frame broadcast/unicast subunit 9113.

The DHCP proxy subunit 9111 is adapted to monitor received DHCP messages and after monitoring a specific DHCP message, send an instruction to the forwarding control subunit 9112, instructing the forwarding control subunit 9112 to send the specific DHCP message to the frame broadcast/unicast subunit 9113.

The forwarding control subunit 9112 is adapted to send the specific DHCP message to the frame broadcast/unicast subunit 9113 according to the instruction sent by the DHCP proxy subunit 9111.

The frame broadcast/unicast subunit 9113 is adapted to receive the specific DHCP message sent by the forwarding control subunit 9112 and broadcast the specific DHCP message to all ANs 92 corresponding to the bound links.

In the above RG 91, after monitoring a specific DHCP message (such as DHCP RELEASE), the DHCP proxy subunit 9111 of the link binding unit 911 instructs the forwarding control subunit 9112 to send the specific DHCP message to the frame broadcast/unicast subunit 9113 and the frame broadcast/unicast subunit 9113 forwards the DHCP message in entirety to all ANs 92 corresponding to the bound links, so that every AN 92 can unbind a corresponding port of the AN 92 from an IP or MAC address by monitoring DHCP messages.

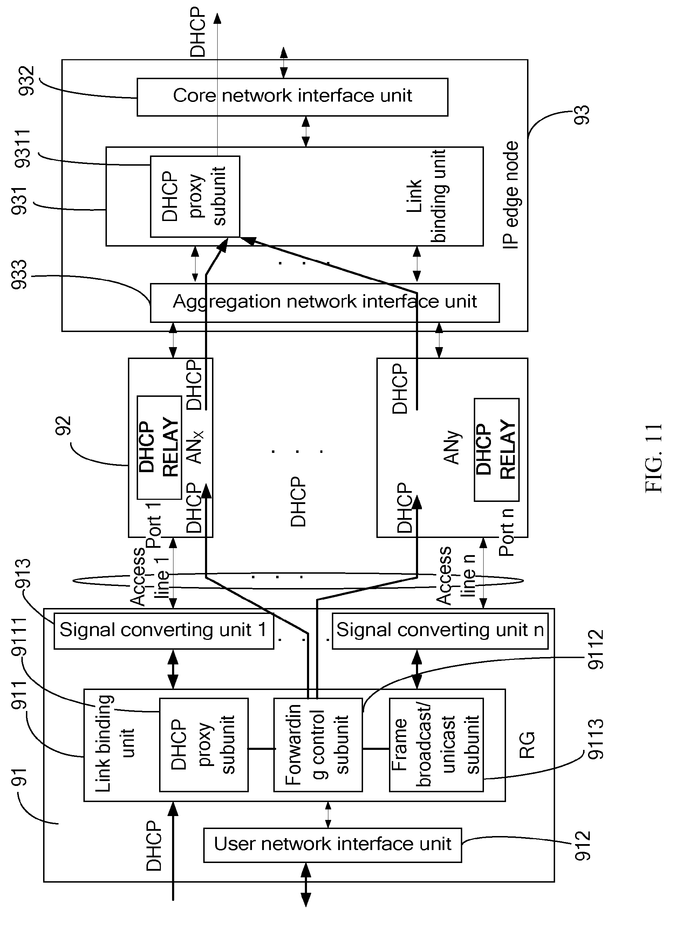

A procedure for unbinding a port of an AN 92 from an IP or MAC address according to an embodiment of the present invention is illustrated in FIG. 11. The procedure includes two portions:
(1) In the link binding unit 911 of the RG 91, the DHCP proxy subunit 9111 monitors received DHCP messages and after monitoring the aforesaid DHCP RELEASE message, sends an instruction to the forwarding control subunit 9112, instructing the forwarding subunit 9112 to send the DHCP RELEASE message to the frame broadcast/unicast subunit 9113, and the frame broadcast/unicast subunit 9113 forwards the DHCP message in entirety to all bound links instead of performing the operations in normal binding cases.
(2) The IP edge node 93 monitors DHCP messages sent from the core network and after monitoring DHCP RELEASE messages from ANs 92 corresponding to the bound links, forwards only one of the identical DHCP RELEASE messages to the core network and discards other identical messages.

The IP edge node 93 includes:
a link binding unit 931, adapted to monitor DHCP messages sent from the core network and after monitoring DHCP RELEASE messages from ANs 92 corresponding to the bound links, forward only one of the identical DHCP RELEASE messages to the core network and discard other identical messages;
a core network interface unit 932, adapted to exchange messages with the core network; and
an aggregation network interface unit 933, adapted to exchange messages with an aggregation network.

The link binding unit 931 includes:
a DHCP proxy subunit 9311, adapted to: monitor DHCP messages sent from the core network, and after monitoring DHCP RELEASE messages, trigger the link binding unit to forward only one of the received identical DHCP RELEASE messages to the core network and discard other identical messages.

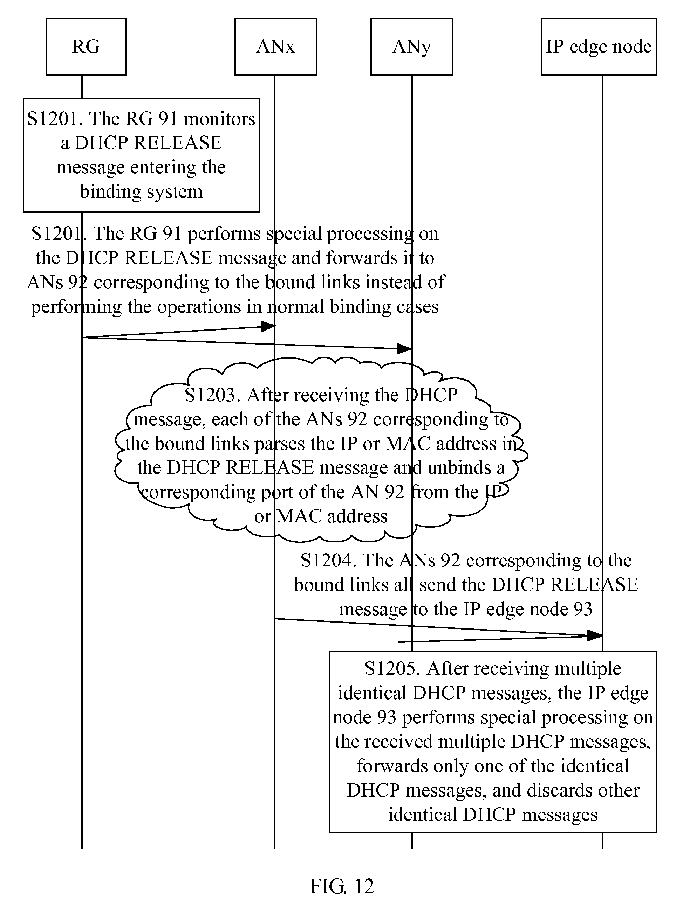

FIG. 12 is a flowchart of unbinding a port from an IP or MAC address according to an embodiment of the present invention. In FIG. 12, the binding system includes only two ANs 92 (ANx, ANy) for exemplary description. In practice, the binding system may include any number of (two and above) bound links and ANs 92 corresponding to the bound links and the any number of ANs 92 process DHCP messages in the same way. Therefore, the processing in the case of any number of ANs 92 can be derived from the method provided in the embodiment of the present invention.
Step S1201: The RG 91 monitors a DHCP RELEASE message entering the binding system.
Step S1202: The RG 91 performs special processing on the DHCP RELEASE message and forwards the message to the ANs 92 corresponding to the bound links instead of performing the operations in normal binding cases. Specifically, the RG 91 may broadcast the DHCP RELEASE message to all ANs 92 corresponding to the bound links. In FIG. 12, ANx and ANy represent the multiple ANs 92 corresponding to the bound links.
Step S1203: After receiving the DHCP message, each of the ANs 92 corresponding to the bound links parses the IP or MAC address in the DHCP RELEASE message and unbinds the corresponding port from the IP or MAC address.
Step S1204: The ANs 92 corresponding to the bound links all send the DHCP RELEASE message to the IP edge node 93.
Step S1205: After receiving multiple identical DHCP messages, the IP edge node 93 performs special processing on the received multiple DHCP messages, forwards only one of the identical DHCP messages, and discards other identical DHCP messages.

In the embodiment of the present invention, after receiving a DHCP message, the link binding unit 911 in the RG 91 does not distribute the DHCP message in the normal distribution procedure of the binding system, but forwards the DHCP message in entirety to the AN 92 corresponding to each bound link. Thus, the AN 92 corresponding to each bound link will receive the DHCP message and the DHCP relay unit in each AN 92 is aware of the DHCP message, so that a port of the AN 92 is unbound from an IP or MAC address.

In the embodiment, the processing of DHCP messages may be applied to specific DHCP messages which include at least the DHCP RELEASE message, or applied to all DHCP messages.

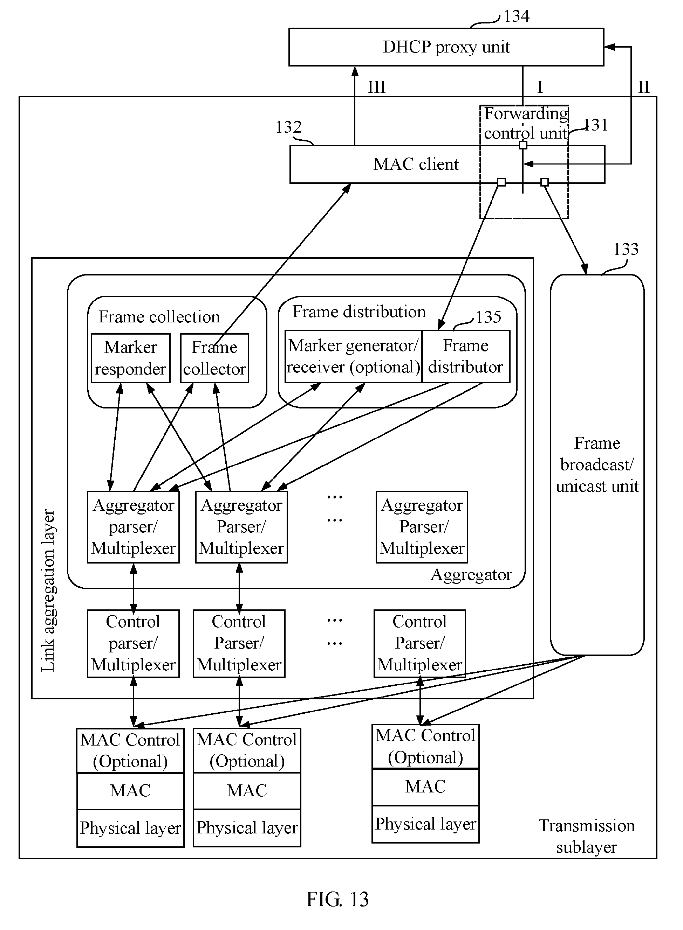

In practice of the above method for unbinding a port from an IP or MAC address, both the RG and the IP edge node must be aware of the specific DHCP message and forward the specific DHCP message in entirety to the AN corresponding to each bound link instead of performing the operations for the DHCP message in normal binding cases. An embodiment of the present invention provides an implementation mode of the forwarding control unit of the RG or IP edge node. As shown in FIG. 13, a forwarding control unit 131 is located on a MAC client 132 and implemented based on IEEE 802.3ad.

The frame broadcast/unicast unit 133 is a unit specially added in IEEE 802.3ad for internal broadcast or specific unicast of the binding system. The frame broadcast/unicast unit 133 is adapted to broadcast a message to all ports or unicast the message to a specific port, applicable to only the transmitting direction. With the frame broadcast/unicast unit 133, received messages can be distributed according to IEEE 802.3ad or the embodiment of the present invention.

In the embodiment of the present invention, the forwarding control unit 131 is integrated in the MAC client 132 and controlled by the DHCP proxy unit 134. The forwarding control unit 131 sends forwarded data to a frame distributor 135 or the new frame broadcast/unicast unit 133. In FIG. 13, "I" represents the downlink processing of messages, where messages are sent to the forwarding control unit 131 in the MAC client 132 through the DHCP proxy unit 134; "II" represents the control of the DHCP proxy unit 134 on the forwarding control unit 131; "III" represents the uplink processing of messages by the MAC client 132, where messages are forwarded to the DHCP proxy unit 134.

The DHCP proxy unit 134 monitors DHCP messages and performs special processing on the messages, and controls the MAC client 132 to forward downlink messages. In the embodiment of the present invention, a specific DHCP message is forwarded in the form of frame broadcast, which means the specific DHCP message is forwarded to each bound port. The DHCP proxy unit 134 monitors DHCP messages, forwards only one of the identical uplink DHCP messages received from different links, and discards other identical messages.

In the binding system provided according to the embodiment of the present invention, the DHCP proxy unit 134 monitors DHCP messages and after monitoring a specific DHCP message, such as DHCP ACK, DHCP REPLY, or DHCP RELEASE, controls the forwarding control unit 131 in the MAC client 132 to forward the message to the frame broadcast/unicast unit 133 for processing. After receiving the DHCP message, the forwarding control unit 131 forwards the message to the frame broadcast/unicast unit 133. After receiving the DHCP message, the frame broadcast/unicast unit 133 broadcasts the message to the bound ports. Through such processing, special processing on a specific DHCP message is realized in the binding system, that is, the specific DHCP message is forwarded in entirety to each corresponding AN.

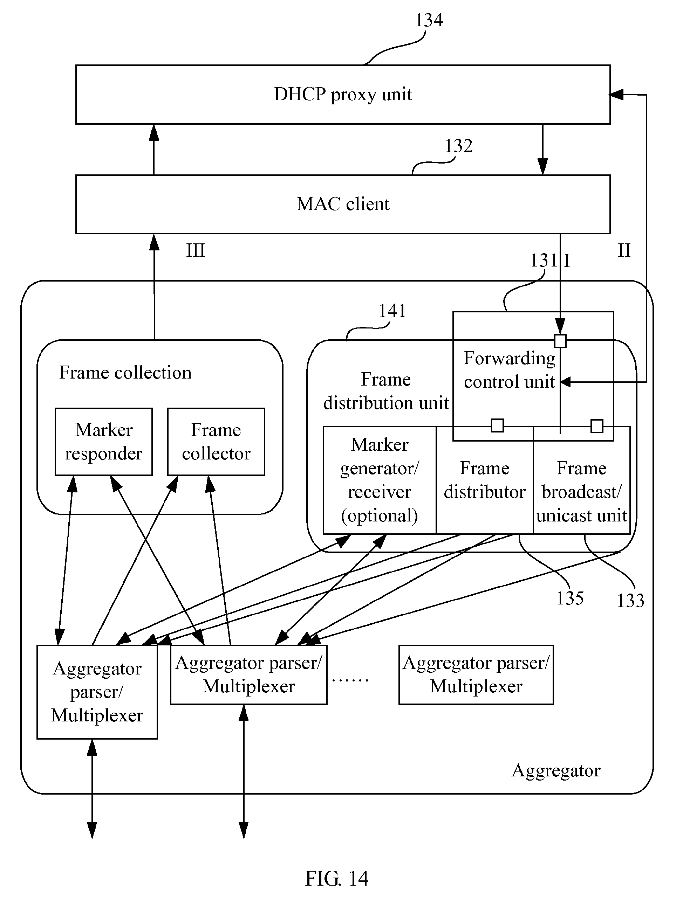

FIG. 14 illustrates another implementation mode of the forwarding control unit in the RG or IP edge node. In FIG. 14, the forwarding control unit 131 is integrated in the frame distribution unit 141 and implemented based on IEEE 802.3ad.

The frame broadcast/unicast unit 133 is a unit specially added in IEEE 802.3ad for internal broadcast or specific unicast of the binding system. The frame broadcast/unicast unit 133 is adapted to broadcast a message to all ports or unicast the message to a specific port, applicable to only the transmitting direction. With the frame broadcast/unicast unit 133, received messages can be distributed according to IEEE 802.3ad or the embodiment of the present invention.

In the embodiment of the present invention, the forwarding control unit 131 is integrated in the frame distribution unit 141 and controlled by the DHCP proxy unit 134. The forwarding control unit 131 sends the forwarded data to the frame distributor 135 or the frame broadcast/unicast unit 133. In FIG. 14, "I" represents the downlink processing of messages, where messages are sent to the forwarding control unit 131 in the frame distribution unit 141 through the MAC client 132 from the DHCP proxy unit 134; "II" represents the control of the DHCP proxy unit 134 on the forwarding control unit 131 with respect to the direction of message forwarding; "III" represents the uplink processing of messages by the frame distribution unit 141, where messages are forwarded to the DHCP proxy unit 134 through the MAC client 132.

The DHCP proxy unit 134 monitors DHCP messages and performs special processing on the messages, and controls the MAC client 132 to forward downlink messages. In the embodiment of the present invention, a specific DHCP message is forwarded in the form of frame broadcast, which means the specific DHCP message is forwarded to each bound port. For identical DHCP messages received from different links in the uplink direction, only one of the messages is forwarded and other identical messages are discarded.

In the binding system provided according to the embodiment of the present invention, the DHCP proxy unit 134 monitors DHCP messages and after monitoring a specific DHCP message, such as DHCP ACK, DHCP REPLY, or DHCP RELEASE, controls the forwarding control unit 131 in the frame distribution unit 141 to send the message to the frame broadcast/unicast unit 133 for processing. After receiving the DHCP message, the forwarding control unit 131 forwards the message to the frame broadcast/unicast unit 133. After receiving the DHCP message, the frame broadcast/unicast unit 133 broadcasts the message to the bound ports. Through such processing, special processing on a specific DHCP message is realized in the binding system, that is, the specific DHCP message is forwarded in entirety to each corresponding AN.

In the embodiment of the present invention, the specific DHCP message, such as DHCP ACK, DHCP REPLY, or DHCP RELEASE, is still processed by the IEEE 802.3ad while a DHCP proxy is applied to implement special processing on the specific DHCP message. After receiving the specific DHCP message, the DHCP proxy forwards only the first specific DHCP message in the normal distribution procedure and discards all identical DHCP messages received later.

The above message forwarding apparatus realizes the broadcast of a message to bound ports or unicast of the message to a specific port, corresponding to the implementation of the transmission sublayer in FIG. 13 and the implementation of the aggregator in FIG. 14.

A binding/unbinding processing method and system based on Layer 2 Control (L2C) according to an embodiment of the present invention will be described.

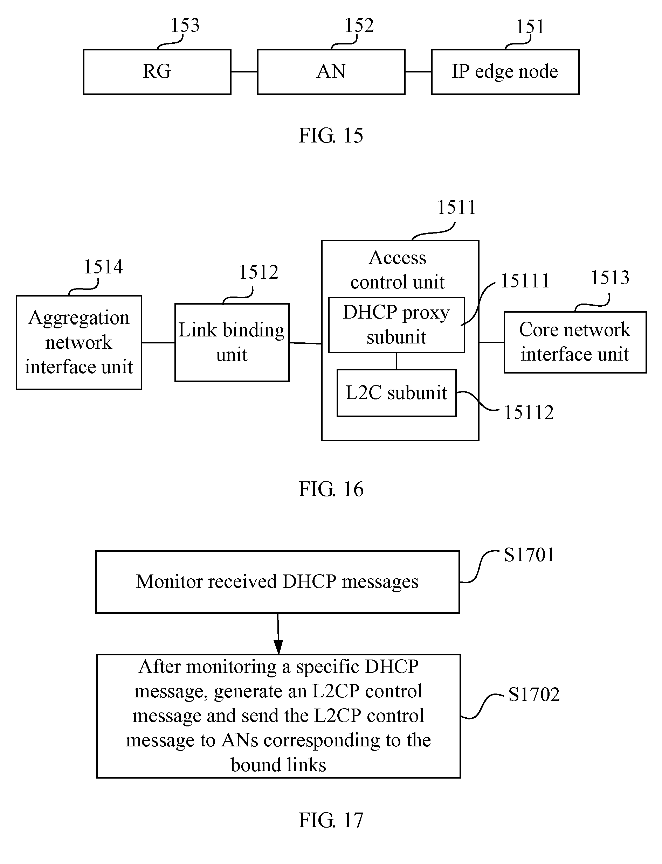

FIG. 15 illustrates a structural diagram of the binding/unbinding processing system according to the embodiment of the present invention. The system includes an IP edge node 151 and an AN 152.

The IP edge node 151 is adapted to: monitor received DHCP messages and after monitoring a specific DHCP message, generate an L2CP control message, and send the L2CP control message to ANs 152 corresponding to the bound links.

The AN 152 is adapted to: receive the L2CP control message from the IP edge node 151, parse and obtain a port and an IP or MAC address carried in the L2CP control message and bind/unbind the port to/from the IP or MAC address according to the obtained port and IP or MAC address. It should be noted that only one AN is shown in FIG. 15, but the number of ANs in the binding/unbinding system may be more than one.

The binding/unbinding processing system further includes an RG 153, adapted to receive DHCP messages sent by ANs 152 corresponding to the bound links.

In the above binding/unbinding processing system, the IP edge node 151 monitors DHCP messages and controls the AN 152 through an L2CP control message to bind/unbind a port of the AN 152 to/from an IP or MAC address.

FIG. 16 illustrates a structural diagram of the IP edge node according to the embodiment of the present invention, including:
an access control unit 1511, adapted to: monitor received DHCP messages and after monitoring a specific DHCP message, generate an L2CP control message which instructs the ANs 152 corresponding to the bound links to bind or unbind the port and the IP or MAC address carried in the L2CP control message, where the specific DHCP message is a DHCP ACK, DHCP REPLY, or DHCP RELEASE message;
a link binding unit 1512, adapted to provide port information of the ANs corresponding to the bound links;
a core network interface unit 1513, adapted to exchange messages with the core network; and
an aggregation network interface unit 1514, adapted to exchange messages with an aggregation network.

The access control unit 1511 includes:
a DHCP proxy subunit 15111, adapted to monitor received DHCP messages; and
an L2C subunit 15112, adapted to generate, after the DHCP proxy subunit 15111 monitors a specific DHCP message, an L2CP control message which instructs the ANs 152 corresponding to the bound links to bind or unbind the port and the IP or MAC address carried in the L2CP control message.

In the above IP edge node 151, the DHCP proxy subunit 15111 of the access control unit 1511 monitors received DHCP messages, and after a specific DHCP message is monitored, the L2C subunit 15112 generates an L2CP control message to control all ANs 152 corresponding to the bound links to bind or unbind the port and IP or MAC address carried in the L2CP control message, so that a port is bound to or unbound from an IP or MAC address.

FIG. 17 is a flowchart of the binding/unbinding processing method according to an embodiment of the present invention. The method includes the following steps:
Step S1701: Monitor received DHCP messages.
Step S1702: After a specific DHCP message is monitored, generate an L2CP control message and send the L2CP control message to all ANs 152 corresponding to the bound links, where the L2CP control message instructs the ANs 152 corresponding to the bound links to bind or unbind the port and IP or MAC address carried in the L2CP control message.

The ANs 152 corresponding to the bound links may bind/unbind the port and IP or MAC address carried in the L2CP control message in the following process:
Each of the ANs 152 corresponding to the bound links receives the L2CP control message, parses and obtains a port and an IP or MAC address carried in the L2CP control message, and binds/unbinds the port of the AN 152 to/from the IP or MAC address according to the obtained port and IP or MAC address.

In the above binding/unbinding processing method, the IP edge node 151 monitors DHCP messages and generates the corresponding L2CP control message, and controls each AN 152 through the L2CP control message to bind/unbind a port of the AN 152 to/from an IP or MAC address.

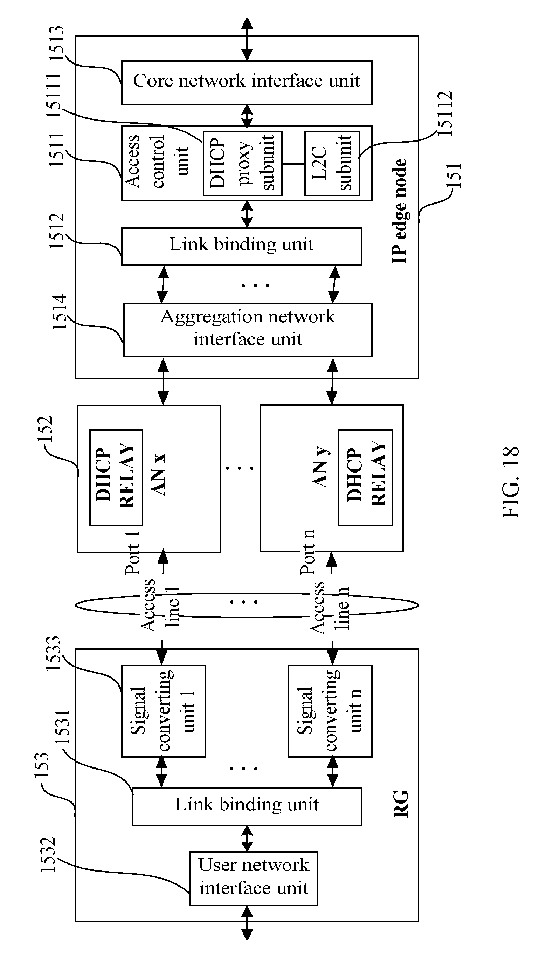

FIG. 18 illustrates a binding/unbinding processing system according to an embodiment of the present invention, where an access control unit 1511 is added to the IP edge node 151 and includes a DHCP proxy subunit 15111 and an L2C subunit 15112.

In the embodiment of the present invention, the processing and message interaction performed by the DHCP proxy subunit 15111, the L2C subunit 15112, and the link binding unit 1512 are as follows:
The DHCP proxy subunit 15111 monitors uplink DHCP messages sent by the binding system and downlink DHCP messages that will soon be sent to the binding system, and triggers the L2C subunit 15112 to initiate L2C over ANs 152. The trigger condition includes but is not limited to:
   (1) triggering the control of binding AN 152 ports to IP or MAC addresses when monitoring a downlink DHCP ACK or DHCP REPLY message that will be soon sent to the binding system;
   (2) triggering the control of unbinding AN 152 ports from IP or MAC addresses when monitoring an uplink DHCP RELEASE message sent from the binding system, etc.

In the embodiment of the present invention, the link binding unit 1512 must provide ANs 152 and ports bound to the RG 153 to the L2C subunit 15112.

After the DHCP proxy subunit 15111 triggers the control over ANs 152, the L2C subunit 15112 first obtains from the link binding unit 1512 information of ANs 152 and ports of the ANs 152 bound to the DSL, generates a binding or unbinding command for each AN 152 and its port, that is, the corresponding L2CP control message, according to the information of ANs 152 and ports of the ANs 152 bound to the DSL and the IP or MAC address information obtained from the DHCP proxy subunit 15111, and sends the corresponding L2CP control message to each AN 152.

The RG 153 includes a link binding unit 1531, adapted to: monitor DHCP messages sent by ANs 152 and after monitoring a specific DHCP message, such as DHCP ACK, DHCP REPLY or DHCP RELEASE, forward one of the specific messages to the user network and discard other identical DHCP messages.

The RG 153 further includes a user network interface unit 1532, adapted to exchange messages with the user network; and
a signal converting unit 1533, adapted to perform signal conversion for the messages exchanged between the RG 153 and the ANs 152.

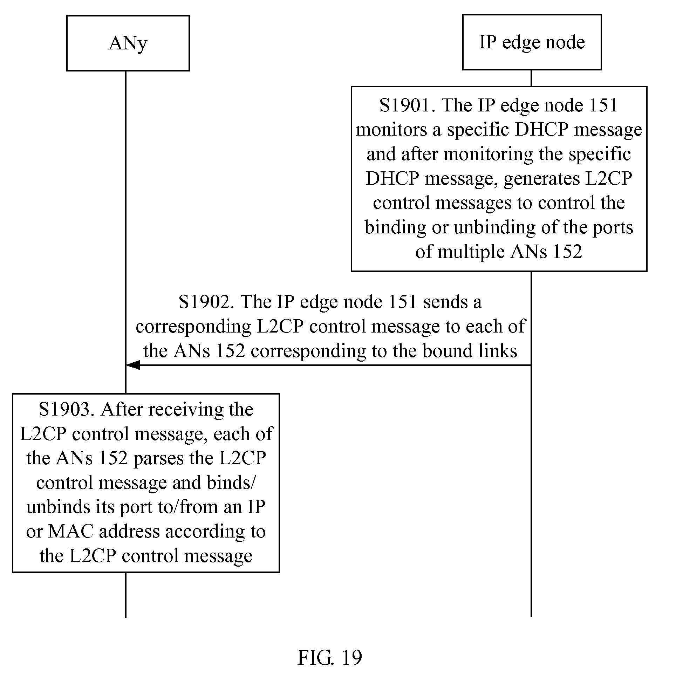

FIG. 19 is a flowchart where the IP edge node 151 binds/unbinds a port of an AN 152 to/from an IP or MAC address through an L2CP control message. In FIG. 19, only one AN is shown while in practice, the IP edge node 151 generates an L2CP control message for all ANs 152 corresponding to the bound links and sends each L2CP control message to the corresponding AN 152, so as to control all ANs 152 corresponding to the bound links. In this embodiment, only one AN 152 is described for exemplary purposes. The processing procedure includes the following steps:
Step S1901: The IP edge node 151 monitors a specific DHCP message and after monitoring the specific DHCP message, such as DHCP ACK, DHCP REPLY, or DHCP RELEASE, generates L2CP control messages to control the binding or unbinding of the ports of multiple ANs 152. The L2CP control messages are generated to control the binding or unbinding of the corresponding ports of the multiple ANs 152.

After monitor a DHCP ACK or DHCP REPLY message, the IP edge node 151 controls the binding of AN 152 ports to IP or MAC addresses; after monitoring a DHCP RELEASE message, the IP edge node 151 controls the unbinding of AN 152 ports from IP or MAC addresses.

Necessary steps inside the IP edge node 151 include:
(a) The IP edge node 151 monitors the DHCP message and is aware that the DHCP message is from a binding system;
(b) The IP edge node 151 obtains the multiple ANs 152 corresponding to the bound links of the user sending the DHCP message and the ports of the ANs 152;
(c) The IP edge node 151 obtains the IP or MAC address information form the DHCP message via the DHCP proxy subunit 15111;

Finally, the IP edge node 151 generates the L2CP control message to control the binding or unbinding of the port of each of the AN 152 after the above steps.

Step 51902: The IP edge node 151 sends a corresponding L2CP control message to each of the ANs 152 corresponding to the bound links.

In this step, the L2CP control message is directly sent to the ANs 152 corresponding to the bound links without passing through the binding system.

Step S 1903: After receiving the L2CP control message, each of the ANs 152 parses the L2CP control message to obtain at least one item of operation type (binding or unbinding), port, and IP or MAC address, and executes the binding/unbinding of the port to/from the IP or MAC address according to the L2CP control message.

In the above binding/unbinding processing method, the IP edge node 151 monitors DHCP messages and generates the corresponding L2CP control message, and controls each AN 152 through the L2CP control message to bind/unbind a port of the AN 152 to/from an IP or MAC address.

Through the descriptions of the preceding embodiments, those skilled in the art may understand that the present invention may be implemented by using hardware only or by using software and a necessary universal hardware platform. Based on such understandings, the technical solution of the present invention may be embodied in the form of a software product. The software product may be stored in a nonvolatile storage medium, which can be a Compact Disk-Read Only Memory (CD-ROM), a Universal Serial Bus (USB) flash disk, or a removable hard disk. The software product includes a number of instructions that enable a computer device (personal computer, server, or network device) to execute the methods provided in the embodiments of the present invention.

It is understandable to those skilled in the art that the accompanying drawings are for illustrating the preferred embodiments only, and the modules or processes in the accompanying drawings are not indispensable.

In addition, the modules in the apparatus in the embodiments of the present invention may be distributed in the way described herein, or distributed in other ways, for example, in one or more other apparatuses. The modules may be combined into one module, or split into multiple submodules.

The sequence number of each embodiment given above is for clear description only, and does not represent the order of preference.

The above descriptions are merely preferred embodiments of the present invention, but not intended to limit the scope of the present invention. Any modifications or variations that can be derived by those skilled in the art should fall within the scope of the present invention.

## Claims

1. A binding processing system, comprising: an Internet Protocol (IP) edge node and an Access Node (AN), wherein:
the IP edge node is adapted to monitor received Dynamic Host Configuration Protocol (DHCP) messages and after monitoring a specific DHCP message, forward the specific DHCP message to all ANs corresponding to bound links, wherein the specific DHCP message is a DHCP ACK or DHCP REPLY message; and
the AN is adapted to: receive the specific DHCP message sent by the IP edge node, parse and obtain an IP or Media Access Control (MAC) address carried in the specific DHCP message, and bind a port of the AN to the IP or MAC address according to the obtained IP address or MAC address.

2. The system of claim 1, further comprising:
a Remote Gateway (RG), adapted to receive the specific DHCP messages forwarded by the ANs corresponding to the bound links and after receiving multiple identical specific DHCP messages, forward one of the specific DHCP messages to a user network and discard other specific DHCP messages.

3. An unbinding processing system, comprising a Remote Gateway (RG) and an Access Node (AN), wherein:
the RG is adapted to monitor received Dynamic Host Configuration Protocol (DHCP) messages and after monitoring a specific DHCP message, forward the specific DHCP message to all ANs corresponding to bound links, wherein the specific DHCP message is a DHCP RELEASE message; and
the AN is adapted to: receive the specific DHCP message sent by the RG, parse and obtain an Internet Protocol (IP) or Media Access Control (MAC) address carried in the specific DHCP message, and unbind a port of the AN from the IP or MAC address according to the obtained IP address or MAC address.

4. The system of claim 3, further comprising:
an IP edge node, adapted to receive the specific DHCP messages forwarded by the ANs corresponding to the bound links and after receiving multiple identical specific DHCP messages, forward one of the specific DHCP messages to a core network and discard other specific DHCP messages.

5. An Internet Protocol (IP) edge node, comprising:
a link binding unit, adapted to monitor received Dynamic Host Configuration Protocol (DHCP) messages and after monitoring a specific DHCP message, forward the specific DHCP message to all Access Nodes (ANs) corresponding to bound links, wherein the specific DHCP message is a DHCP ACK or DHCP REPLY message;
a core network interface unit, adapted to exchange messages with a core network; and
an aggregation network interface unit, adapted to exchange messages with an aggregation network.

6. The IP edge node of claim 5, wherein the link binding unit comprises: a DHCP proxy subunit, a forwarding control subunit, and a frame broadcast/unicast subunit, wherein:
the DHCP proxy subunit is adapted to monitor received DHCP messages and after monitoring the specific DHCP message, send an instruction to the forwarding control subunit, instructing the forwarding control subunit to send the specific DHCP message to the frame broadcast/unicast subunit;
the forwarding control subunit is adapted to send the specific DHCP message to the frame broadcast/unicast subunit according to the instruction sent by the DHCP proxy subunit; and
the frame broadcast/unicast subunit is adapted to receive the specific DHCP message sent by the forwarding control subunit and broadcast the specific DHCP message to all ANs corresponding to the bound links.

7. A Remote Gateway (RG), comprising:
a link binding unit, adapted to monitor received Dynamic Host Configuration Protocol (DHCP) messages and after monitoring a specific DHCP message, forward the specific DHCP message to all Access Nodes (ANs) corresponding to bound links, wherein the specific DHCP message is a DHCP RELEASE message;
a user network interface unit, adapted to exchange messages with a user network; and
a signal converting unit, adapted to perform signal conversion for messages sent by the user network.

8. The RG of claim 7, wherein the link binding unit comprises: a DHCP proxy subunit, a forwarding control subunit, and a frame broadcast/unicast subunit, wherein:
the DHCP proxy subunit is adapted to monitor received DHCP messages and after monitoring the specific DHCP message, send an instruction to the forwarding control subunit, instructing the forwarding control subunit to send the specific DHCP message to the frame broadcast/unicast unit;
the forwarding control subunit is adapted to send the specific DHCP message to the frame broadcast/unicast subunit according to the instruction sent by the DHCP proxy subunit; and
the frame broadcast/unicast subunit is adapted to receive the specific DHCP message sent by the forwarding control subunit and broadcast the specific DHCP message to all ANs corresponding to the bound links.

9. A binding/unbinding processing method, comprising:
monitoring received Dynamic Host Configuration Protocol (DHCP) messages; and
after monitoring a specific DHCP message, forwarding the specific DHCP message to all Access Nodes (ANs) corresponding to bound links and instructing each AN to bind/unbind a port of the AN to/from an Internet Protocol (IP) or Media Access Control (MAC) address, wherein the specific DHCP message includes a DHCP ACK, DHCP REPLY, or DHCP RELEASE message.

10. The method of claim 9, wherein the binding/unbinding of the port of the AN to/from the IP or MAC address comprises:
by the AN, parsing and obtaining an IP or MAC address carried in the specific DHCP message; and
binding/unbinding the port of the AN to/from the IP or MAC address according to the obtained IP or MAC address.

11. The method of claim 9, after the binding/unbinding of the port of the AN to/from the IP or MAC address, further comprising:
forwarding, by the AN, the specific DHCP message to a Remote Gateway (RG) or an IP edge node, and by the RG or the IP edge node, after receiving multiple identical specific DHCP messages, forwarding one of the specific DHCP messages and discarding other specific DHCP messages.

12. A binding/unbinding processing method, comprising:
monitoring received Dynamic Host Configuration Protocol (DHCP) messages; and
after monitoring a specific DHCP message, generating a Layer 2 Control Protocol (L2CP) control message and sending the L2CP control message to all Access Nodes (ANs) corresponding to bound links, wherein the L2CP control message instructs each of the ANs corresponding to the bound links to bind/unbind a port carried in the L2CP control message to/from an Internet Protocol (IP) or Media Access Control (MAC) address carried in the L2CP control message.

13. The method of claim 12, wherein the binding/unbinding of the port carried in the L2CP control message to/from the IP or MAC address carried in the L2CP control message comprises:
receiving, by each of the ANs corresponding to the bound links, the L2CP control message;
parsing and obtaining the port and the IP or MAC address carried in the L2CP control message; and
binding/unbinding the port to/from the IP or MAC address according to the obtained port and IP or MAC address.

14. A binding/unbinding processing system, comprising: an Internet Protocol (IP) edge node and an Access Node (AN), wherein:
the IP edge node is adapted to: monitor received Dynamic Host Configuration Protocol (DHCP) messages and after monitoring a specific DHCP message, generate a Layer 2 Control Protocol (L2CP) control message, and send the L2CP control message to all ANs corresponding to bound links; and
the AN is adapted to: receive the L2CP control message from the IP edge node, parse and obtain a port and an IP or Media Access Control (MAC) address carried in the L2CP control message, and bind/unbind the port to/from the IP or MAC address according to the obtained port and IP or MAC address.

15. An Internet Protocol (IP) edge node, comprising:
an access control unit, adapted to: monitor received Dynamic Host Configuration Protocol (DHCP) messages and after monitoring a specific DHCP message, generate a Layer 2 Control Protocol (L2CP) control message which instructs all Access Nodes (ANs) corresponding to bound links to bind/unbind a port carried in the L2CP control message to/from an IP or Media Access Control (MAC) address carried in the L2CP control message, wherein the specific DHCP message is a DHCP ACK, DHCP REPLY, or DHCP RELEASE message;
a link binding unit, adapted to provide port information of the ANs corresponding to the bound links to the access control unit;
a core network interface unit, adapted to exchange messages with a core network; and
an aggregation network interface unit, adapted to exchange messages with an aggregation network.

16. The IP edge node of claim 15, wherein the access control unit comprises:
a DHCP proxy subunit, adapted to monitor received DHCP messages; and
a Layer 2 Control (L2C) subunit, adapted to generate, after the DHCP proxy subunit monitors the specific DHCP message, the L2CP control message which instructs the ANs corresponding to the bound links to bind/unbind the port carried in the L2CP control message to/from the IP or MAC address carried in the L2CP control message.
